# EUROPÄISCHE PATENTSCHRIFT

(11) **EP 1 267 107 B1**
(45) Veröffentlichungstag und Bekanntmachung des Hinweises auf die Patenterteilung: **22.07.2009**
(21) Anmeldenummer: 02000926.2
(22) Anmeldetag: 16.01.2002
(51) Int. Cl.: F16J 15/34, F16J 15/56

(54) **Stangen- und Kolbenprimärdichtung**
Primary seal arrangement for piston and rod
Etanchéité primarie d'une piston et tige de piston

(30) Priorität: 09.04.2001 DE 10117662
(43) Veröffentlichungstag der Anmeldung: 18.12.2002
(73) Patentinhaber: Carl Freudenberg KG, 69469 Weinheim (DE)
(72) Erfinder: von Borstel, Dieter, 21720 Guderhandviertel (DE); Reichow, Günter, 21218 Seevetal 6 (DE); Timmermann, Hans-Jürgen, 22559 Hamburg (DE)

(56) Entgegenhaltungen:
- EP-A- 0 104 504
- DE-A- 3 236 636
- DE-A- 3 620 539
- DE-A- 4 017 036
- DE-A- 4 124 221
- DE-U- 7 831 410
- BUSAK+SHAMBAN: " Laufwerkdichtung" PROSPEKT, 1993, XP002205605

## Beschreibung

Für das Abdichten von axial beweglichen Stangen oder Kolben werden Dichtungsanordnungen eingesetzt, um eine Hochdruckseite gegenüber einer Niederdruckseite abzudichten. Bei diesen Dichtungen werden häufig Dichtkantenringe aus einem zähelastischen Kunststoff auf der Basis von PTFE oder aus einem härterem Thermoplast eingesetzt, die an ihren inneren Umfangsfläche eine oder mehrere Dichtkanten aufweisen. Auf ihrer Außenseite werden die Dichtkantenringe durch einen Profilring aus einem weicheren Elastomer-Werkstoff zusätzlich radial angepresst und abgedichtet. Dichkantentring und Profilring werden in eine Gehäusenut eingebaut. Bei mehreren hintereinander angeordneten Dichtungen an einer Stange kann bei translatorischer Bewegung der beiden Maschinenteile zueinander eine invertierte Drucklage entstehen, bei der das Druckgefälle sich umkehrt, das heißt, die Niederdruckseite wird zur Hochdruckseite und die Hochdruckseite zur Niederdruckseite. Dadurch können unzulässige Deformationen an dem Dichtkantenring auftreten, was eine Leckage oder einen frühzeitigen Ausfall der Dichtungsanordnung zur Folge hat. Eine Druckumkehr tritt insbesondere dann ein, wenn eine Druckabsenkung auf der Hochdruckseite stattfindet und der Druckaufbau im Dichtraum zwischen Primär- und Sekundärdichtung auf einem höheren Druckniveau bestehen bleibt oder nur sehr zeitverzögernd auf das Niveau auf der Hochdruckseite abfällt. Der Druck im Dichtraum kann dabei deutlich über dem maximalen Betriebsdruck liegen. Neben dem Anstieg der Reibkraft im gesamten Dichtsystem kann unter diesen Umständen der Dichtkantenring der Primärdichtung verdreht werden. Durch plastische Deformation und Verschleiß wird die Ausgangskontaktpressung der Dichtkante derart gestört, dass eine ausreichende Dichtfunktion nicht mehr vorliegt.

### Stand der Technik

Durch die DE 196 54 357 A1 ist eine Dichtungsanordnung bekannt geworden, bei der in der Anlageoberfläche des Dichtrings mindestens ein Verbindungskanal vorgesehen ist, über den die Hochdruckseite die Niederdruckseite verbindbar sind. Spannring und Dichtring mit dem Verbindungskanal sind so miteinander ausgerichtet, dass die Hochdruckseite gegenüber der Niederdruckseite durch den Spannring verschlossen ist und dass bei invertierter Drucklage der Verbindungskanal freigegeben wird. Der Spannring wirkt insofern wie ein Rückschlagventil.

Eine andere Lösung des Problems ist der DE 36 20 539 A1 zu entnehmen. Dort wird ebenfalls ein Dichtring aus elastischem Kunststoff und ein Andrückring verwendet. Der Dichtring hat an seiner der Stange zugewandten Innenfläche zwei axial zueinander versetzte ringförmige Dichtkanten und hat mindestens einen von der Innenfläche zwischen den Dichtkanten ausgehenden und in die Außenfläche des Dichtrings mündenden Kanal. Die Öffnung des Kanals ist vom Spannring bedeckt. Auf diese Weise entsteht eine Art Überdruckventil und sobald der Zwischendruck zwischen den Dichtkanten den Wert der Flächenpressung, mit der der Spannring auf der Mündung des Kanals aufliegt, überschreitet, hebt der Spannring von der Öffnung ab und die Flüssigkeit kann über den Kanal hindurch wieder in den abzudichtenden Raum zurückfließen. Bei dieser Lösung wird der Raum, gebildet durch zwei Dichtkanten einer Dichtung, ventiliert.

### Darstellung der Erfindung

Der Erfindung liegt deshalb die Aufgabe zugrunde, eine Dichtungsanordnung zu schaffen, die einfach in ihrem Aufbau ist und die einem Druckaufbau im Dichtraum zwischen zwei Einzeldichtungen entgegenwirkt. Ein Druckaufbau im Dichtraum soll bei einer Druckabsenkung auf der Hochdruckseite nicht auf einem höheren Druckniveau eingespannt werden beziehungsweise darf der Druckabsenkung auf der Hochdruckseite nur stark zeitverzögert folgen. Gleichzeitig soll bei erneutem Druckanstieg auf der Hochdruckseite kein oder nur ein geringer Druckanstieg im Dichtungszwischenraum erfolgen.

Die Lösung der gestellten Aufgabe wird bei einer Stangen- oder Kolbenprimärdichtung mit einer dem abzudichtenden Raum (1) zugewandten Primär- und einer davon abgewandten Sekundärdichtung, bei der die Primärdichtung in eine in Richtung des relativ beweglichen Maschinenteils geöffnete Nut eines Halteelementes eingefügt ist, die auf der von dem abzudichtenden Raum abgewandten Seite durch eine sich im Wesentlichen senkrecht zur Dichtungsachse erstreckende, erste Seitenfläche begrenzt ist und einen Dichtkantenring aus zähhartem Kunststoff enthält, der eine an dem Maschinenteil anliegende Dichtkante aufweist und durch einen Profilring aus elastomerem Werkstoff mit der Dichtkante an das Maschinenteil angedrückt ist, der auf der Bodenfläche der Nut abgestützt ist und am Dichtkantenring mit seiner Innenfläche anliegt, erfindungsgemäß dadurch erreicht, dass der Dichtkantenring zwischen der Dichtkante und der der Seitenfläche zugewandten Begrenzungsfläche ein im Wesentlichen rechtwinklig begrenztes Profil hat, dass die die Dichtkante auf der druckabgewandten Seite begrenzende Fläche im entlasteten Zustand der Dichtung mit der Dichtungsachse einen Winkel von maximal 8° einschließt und dass der Dichtkantenring von mindestens einer Entlastungsöffnung durchgriffen ist, die zwischen der hochdruckseitigen Dichtkante und der Außenfläche des Dichtkantenrings angeordnet ist und in der niederdruckseitigen Begrenzungsfläche mündet. Eine solche Dichtung hat einen weiten Einsatzbereich, da sie unabhängig von der Ausgestaltung der Sekundärdichtung eingesetzt werden kann. Sie ist leicht herstellbar und bei niedrigsten Druckdifferenzen wirksam. Sobald eine Umkehrung des Druckverhältnisses eintritt, wird die Mündung der Entlastungsöffnung freigegeben und die Flüssigkeit kann in umgekehrter Richtung zurückfließen.

Um eine hohe Funktionssicherheit zu erreichen, ist es möglich, den Dichtkantenring auf der dem abzudichtenden Raum zugewandten Seite der Dichtkante mit einer umlaufenden Abstützwulst zu versehen und den Raum zwischen der Dichtkante und dem Abstützwulst durch mindestens eine Axialnut in der Abstützwulst zu ventilieren. Bei ihrer Herstellung wird die Abstützwulst so ausgebildet, dass ihr Nenndurchmesser im Wesentlichen mit demjenigen der Dichtkante übereinstimmt.

Um eine axiale Orientierung zwischen Dichtkantenring und Profilring zu erreichen kann der Dichtkantenring den Profilring auf der von dem abzudichtenden Raum abgewandten Seite mit einem ersten Vorsprung hintergreifen. Desweiteren kann der Andrückring mit einer Seitenwulst auf der dem abzudichtenden Raum zugewandten Seitenfläche der Nut abgestützt sein.

### Kurzbeschreibung der Zeichnung

Anhand mehrerer in der Zeichnung dargestellten Ausführungsbeispiele wird die Erfindung nachstehend näher erläutert.

Es zeigt:
Fig. 1 eine Stangendichtung mit mehreren Dichtelementen im Schnitt
Fig. 2 die Primärdichtung nach Fig. 1 in vergrößerter Darstellung und
Fig. 3 eine andere Ausbildung der Primärdichtung im Schnitt.

### Ausführung der Erfindung

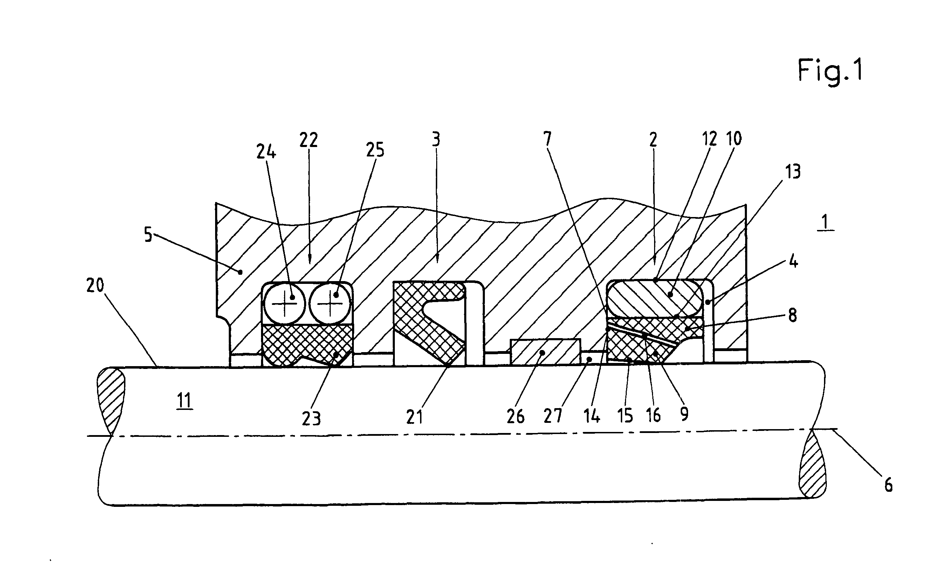

In der Fig. 1 ist im Schnitt ein Halteelement 5, zum Beispiel eine Gehäusewand gezeigt, die von dem Maschinenteil 11 durchdrungen ist. Auf der rechten Seite des Halteelements 5 befindet sich der abzudichtende Raum 1. Die Dichtungsanordnung kann über unterschiedliche Teile verfügen. Dabei ist eine dem abzudichtenden Raum 1 zugewandte Primärdichtung 2 vorgesehen und eine davon abgewandte Sekundärdichtung 3. Die Sekundärdichtung 3 ist im vorliegenden Beispiel als Lippendichtung mit der Lippe 21 ausgebildet. In vielen Fällen wird zusätzlich ein doppeltwirkender Abstreifer 22 eingesetzt. Dieser besteht aus einem Dichtring 23, der durch zwei Spannringe 24 und 25 gehalten ist und an das Maschinenteil 11 angepresst wird. Für das Maschinenteil 11 wird ein Führungsring 26 aus geeignetem Material vorgesehen. Die Primärdichtung 2 ist in eine im Halteelement 5 befindliche Nut 4 eingefügt. Insbesondere die Nutseitenfläche 7 erstreckt sich im Wesentlichen senkrecht zur Dichtungsachse 6. Die Primärdichtung 2 besteht aus dem Dichtkantenring 8, der aus zähhartem Kunststoff hergestellt ist, vorzugsweise aus PTFE, und der eine am Maschinenteil 11 anliegende Dichtkante 9 hat. Der Dichtkantenring 8 wird durch den Profilring 10 aus elastomerem Werkstoff an das Maschinenteil 11 angedrückt. Der Profilring 10 stützt sich auf der Bodenfläche 12 der Nut 4 ab. Mit seiner Innenfläche 13 liegt der Profilring 10 am Dichtkantenring 8 an. Die Begrenzungsfläche 14 des Dichtkantenrings 8 liegt an der ersten Seitenfläche 7 der Nut 4 an und hat ein im Wesentlichen rechtwinklig begrenztes Profil. Die zwischen der Dichtkante 9 und der Begrenzungsfläche 14 liegende Fläche 15 des Abstreifrings 8 ist leicht schräg ausgebildet und hat im entlasteten Zustand der Dichtung 2 einen Winkel β zur Dichtfläche 20 beziehungsweise Dichtungsachse 6 von maximal 8°. Der Dichtkantenring 8 hat eine oder auf seinem Umfang verteilt mehrere Entlastungsöffnungen 16, die zwischen Dichtkante 9 und der Außenfläche 13 des Dichtkantenrings 8 angeordnet sind und in der Begrenzungsfläche 14 münden.

Bei einem anstehenden Überdruck im abzudichtenden Raum 1 liegt der Dichtkantenring 8 mit seiner Dichtkante 9 am Maschinenteil 11 und mit seiner Begrenzungsfläche 14 an der Seitenfläche 7 der Nut 4 an. Sobald sich in dem Innenraum 27 zwischen der Primärdichtung 2 und der Sekundärdichtung 3 ein Überdruck aufgebaut hat, der über dem Druck in dem Raum 1 liegt, kann die Druckflüssigkeit zwischen die Seitenfläche 7 der Nut 4 und die Begrenzungsfläche 14 des Abstreifrings 8 gelangen und wird von dort durch die Entlastungsöffnungen 16 in den Druckraum 1 geleitet.

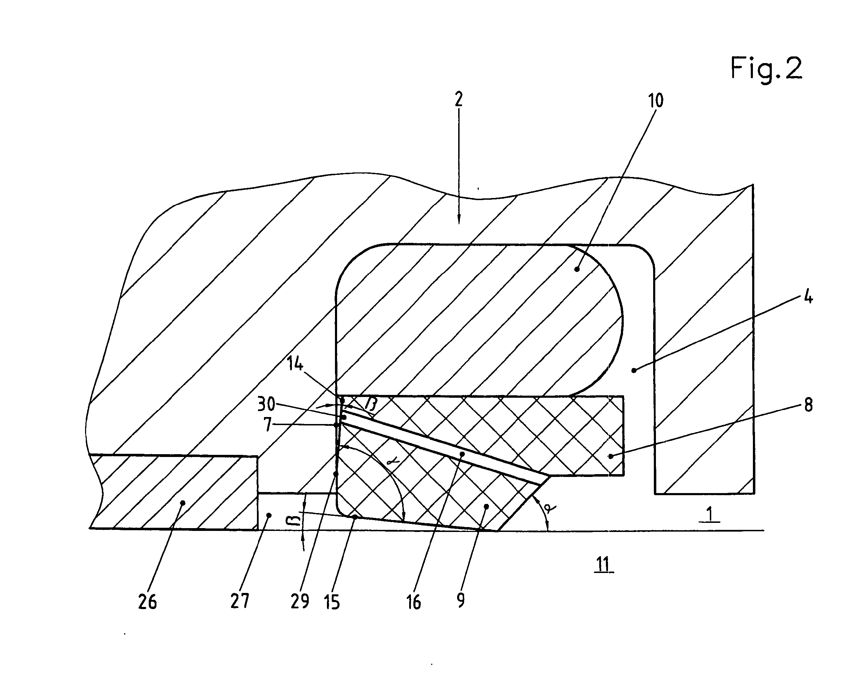

In der Fig. 2 ist in vergrößertem Maßstab die Primärdichtung 2 dargestellt. In die Nut 4 ist der Dichtkantenring 8 und der Profilring 10 eingefügt. Der Dichtkantenring 8 ist mit der am Maschinenteil 11 anliegenden Dichtkante 9 versehen. Mit der zur Mittelachse gerichteten Ringfläche 29 der Begrenzungsfläche 14 liegt der Dichtkantenring 8 an der vom abzudichtenden Raum 1 abgewandten Seitenfläche 7 der Nut 4 an. Die Entlastungsöffnungen 16 sind so angelegt, dass sie eine Verbindung vom abzudichtenden Raum 1 zu dem zwischen der Primärdichtung 2 und der Sekundärdichtung 3 befindlichen Raum 27 herstellen können. Die Lage der Entlastungsöffnungen 16 innerhalb des Abstreifrings 8 kann hier beliebig sein. Für die Wirkung des Dichtrings ist von Bedeutung, dass bei der Druckdifferenz zwischen dem Raum 1 und dem Raum 27 die Begrenzungsfläche 14 mit der Mündung 30 der Entlastungsöffnung 16 an der Seitenfläche 7 der Nut 4 anliegt, so dass die Mündung 30 verschlossen ist. Hierfür wird der Dichtkantenring 8 an die Seitenfläche 7 angedrückt. Sobald der Druck im Raum 27 den Druck im Raum 1 überschreitet, aus welchen Gründen auch immer, wird der Dichtkantenring 8 geringfügig in Richtung auf den Raum 1 gedrückt und Flüssigkeit kann aus dem Raum 27 zwischen dem zwischen der Ringfläche 29 und der Seitenfläche 7 entstehenden Spalt zu den Mündungen 30 der Entlastungsöffnungen 16 und damit über die Entlastungsöffnungen 16 in den Raum 1 gelangen, bis der Druck wieder ausgeglichen ist.

Der Querschnitt der Entlastungsöffnungen 16 ist so dimensioniert, dass bereits bei relativ geringer Druckbeaufschlagung des Raums 1 der Dichtkantenring 8 mit seiner Fläche 14 an der Seitenfläche 7 der Nut 4 anliegt. Bevorzugt beträgt der Winkel δ zwischen der Begrenzungsfläche 14 und der Fläche 15 auf der Innenseite des Dichtkantenrings 8 90°. Die beiden Winkel β zwischen der Begrenzungsfläche 14 und der Seitenfläche 7 beziehungsweise der Innenfläche 15 des Dichtkantenrings 8 und der Fläche 20 des Maschinenteils 11 können zwischen 0° und 8° liegen. Der von der Dichtkante 9 zum Raum 1 ausgehende Winkel α kann eine den konstruktiven Gegebenheiten entsprechende Größe annehmen.

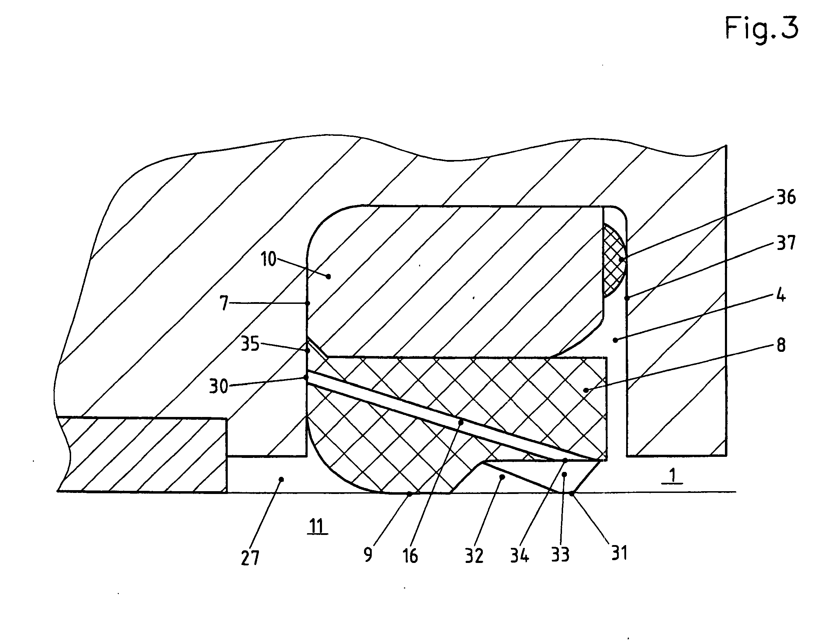

In der Fig. 3 ist eine Ausführungsform der Primärdichtung 2 gewählt, bei der der Dichtkantenring 8 zusätzlich mit einer umlaufenden Abstützwulst 31 versehen ist. Mit dieser Wulst 31 stützt sich der Dichtkantenring zusätzlich auf dem Maschinenteil 11 ab. Der Raum 32 zwischen der Dichtkante 9 und dem Abstützwulst 31 ist über mehrere Axialnuten 33 mit dem Raum 1 verbunden. Auf diese Weise ist der Raum 32 ventiliert. Die Entlastungsöffnungen 16 liegen mit ihren Eingangsöffnungen 34 im Bereich der Axialnuten 33. Der Nenndurchmesser der Abstützwulst 31 ist bei ihrer Herstellung im Wesentlichen gleich mit dem Nenndurchmesser der Dichtkante 9.

Außerdem hat der Dichtkantenring 8 auf der vom Raum 1 abgewandten Seite einen Vorsprung 35, mit dem er den Profilring 10 hintergreift. Zusätzlich ist der Profilring 10 ist mit der Seitenwulst 36 versehen, mit der er sich auf der Seitenfläche 37 der Nut 4 abstützt.

## Patentansprüche

1. Stangen- oder Kolbenprimärdichtung, umfassend eine dem abzudichtenden Raum (1) zugewandte Primär- (2) und eine davon abgewandte Sekundärdichtung (3), bei der die Primärdichtung (2) in eine in Richtung des relativ beweglichen Maschinenteils (11) geöffnete Nut (4) eines Halteelementes (5) eingefügt ist, die auf der von dem abzudichtenden Raum (1) abgewandten Seite durch eine sich im Wesentlichen senkrecht zur Dichtungsachse (6) erstreckende, erste Seitenfläche (7) begrenzt ist, und einen Dichtkantenring (8) aus zähhartem Kunststoff enthält, der eine an dem Maschinenteil (11) anliegende Dichtkante (9) aufweist und durch einen Profilring (10) aus elastomerem Werkstoff mit der Dichtkante (9) an das Maschinenteil (11) angedrückt ist, der auf der Bodenfläche (12) der Nut (4) abgestützt ist und am Dichtkantenring (8) mit seiner Innenfläche (13) anliegt, **dadurch gekennzeichnet, dass** die der ersten Seitenfläche (7) zugewandte Begrenzungsfläche (14) und die zwischen der Dichtkante (9) und der Begrenzungsflöche (14) liegende Fläche (15) ein im Wesentlichen rechtwinklig begrenztes Profil bilden, dass die Dichtkante (9) auf der druckabgewandten Seite begrenzende Fläche (15) im entlasteten Zustand der Dichtung (2) mit der Dichtungsachse (6) einen Winkel (β) von maximal 8° einschließt und dass der Dichtkantenring (8) von mindestens einer Entlastungsöffnung (16) durchgriffen ist, die zwischen der Dichtkante (9) und der Außenfläche des Dichtkantenrings (8) angeordnet ist und in der Begrenzungsfläche (14) mündet.

2. Stangen- oder Kolbenprimärdichtung nach Anspruch 1, **dadurch gekennzeichnet, dass** das die Entlastungsöffnung (16) einen Querschnitt von vorzugsweise 0,19 und 3,1 mm² hat.

3. Stangen- oder Kolbenprimärdichtung nach Anspruch 1 oder 2, **dadurch gekennzeichnet, dass** der Dichtkantenring (8) auf der dem abzudichtenden Raum (1) zugewandten Seite der Dichtkante (9) eine umlaufende Abstützwulst (31) aufweist und der Raum (32) zwischen der Dichtkante (9) und der Abstützwulst (31) durch mindestens eine Axialnut (33) in der Abstützwulst (31) ventiliert wird.

4. Stangen- oder Kolbenprimärdichtung nach einem der Ansprüche 1 bis 3, **dadurch gekennzeichnet, dass** die Abstützwulst (31) bei ihrer Herstellung einen Nenndurchmesser hat, der im Wesentlichen mit demjenigen der Dichtkante (9) übereinstimmt.

5. Stangen- oder Kolbenprimärdichtung nach einem der Ansprüche 1 bis 4, **dadurch gekennzeichnet, dass** der Dichtkantenring (8) den Profilring (10) auf der von dem abzudichtenden Raum (1) abgewandten Seite mit einem Vorsprung (35) hintergreift,

6. Stangen- oder Kolbenprimärdichtung nach einem der Ansprüche 1 bis 5, **dadurch gekennzeichnet, dass** der Profilring (10) mit einer Seitenwulst (36) auf der dem abzudichtenden Raum (1) zugewandten Seitenfläche (37) der Nut (4) abgestützt ist.

## Claims

1. Primary seal arrangement for a rod or piston, comprising a primary seal arrangement (2) that faces towards the space (1) to be sealed off and a secondary seal arrangement (3) that faces away from said space (1), in which the primary seal arrangement (2) is inserted into a groove (4), which groove (4) is open in the direction of the relatively movable machine part (11), of a retaining element (5) and which groove (4), on the side facing away from the space (1) to be sealed off, is delimited by a first side surface (7) that extends substantially perpendicular to the seal arrangement axis (6), and which groove (4) comprises a sealing edge ring (8) composed of tough, hard plastic, which sealing edge ring (8) has a sealing edge (9) that bears against the machine part (11) and which sealing edge ring (8) is pressed with the sealing edge (9) against the machine part (11) by means of a profiled ring (10) composed of elastomeric material, which profiled ring (10) is supported on the base surface (12) of the groove (4) and which profiled ring (10) bears with its inner surface (13) against the sealing edge ring (8), **characterized in that** the boundary surface (14) that faces towards the first side surface (7) and the surface (15) that is situated between the sealing edge (9) and the boundary surface (14) form a profile that is delimited substantially at right angles, **in that** the sealing edge (9), on the surface (15) that delimits the side that is remote from the pressure, encloses an angle (β) of a maximum of 8° with the seal arrangement axis (6) when the seal arrangement (2) is in the unloaded state, and **in that** at least one relief opening (16) extends through the sealing edge ring (8), which relief opening (16) is arranged between the sealing edge (9) and the outer surface of the sealing edge ring (8) and opens out in the boundary surface (14).

2. Primary seal arrangement according to Claim 1 for a rod or piston, **characterized in that** the relief opening (16) has a cross section of preferably 0.19 and 3.1 mm².

3. Primary seal arrangement according to Claim 1 or 2 for a rod or piston, **characterized in that** the sealing edge ring (8) has, on that side of the sealing edge (9) which faces towards the space (1) to be sealed off, an encircling support bead (31), and the space (32) between the sealing edge (9) and the support bead (31) is ventilated by means of at least one axial groove (33) in the support bead (31).

4. Primary seal arrangement according to one of Claims 1 to 3 for a rod or piston, **characterized in that** the support bead (31), when it is produced, has a nominal diameter that substantially corresponds to that of the sealing edge (9).

5. Primary seal arrangement according to one of Claims 1 to 4 for a rod or piston, **characterized in that** the sealing edge ring (8) engages, with a projection (35), behind the profiled ring (10) on the side facing away from the space (1) to be sealed off.

6. Primary seal arrangement according to one of Claims 1 to 5 for a rod or piston, **characterized in that** the profiled ring (10) is supported with a side bead (36) on that side surface (37) of the groove (4) which faces towards the space (1) to be sealed off.

## Revendications

1. Joint d'étanchéité primaire pour tige ou piston, comprenant :
un joint d'étanchéité primaire (2) tourné vers l'espace (1) à fermer hermétiquement et un joint d'étanchéité secondaire (3) non tourné vers cet espace, le joint d'étanchéité primaire (2) étant inséré dans une rainure (4) d'un élément de maintien (5) qui est ouverte en direction de la pièce de machine (11) qui se déplace par rapport à lui,
la rainure étant délimitée sur son côté non tourné vers l'espace (1) à fermer hermétiquement par une première surface latérale (7) qui s'étend essentiellement perpendiculairement à l'axe (6) du joint d'étanchéité et contenant une bague (8) de bord d'étanchéité en matière synthétique dure dont un bord d'étanchéité (9) est appliqué sur la pièce de machine (11), qui est repoussée avec le bord d'étanchéité (9) sur la pièce de machine (11) par une bague profilée (10) en matériau élastomère qui s'appuie sur la surface de fond (12) de la rainure (4) et qui repose par sa surface intérieure (13) contre la bague de bord d'étanchéité (8),
**caractérisé en ce que**
la surface frontière (14) tournée vers la première surface latérale (7) et la surface (15) située entre le bord d'étanchéité (9) et la surface frontière (14) forment un profil délimité essentiellement à angle droit,
**en ce que** lorsque le joint d'étanchéité (2) est à l'état délesté, le bord d'étanchéité (9) forme sur la surface (15) qui délimite le côté non tourné vers la pression un angle (β) d'au plus 8° avec l'axe (6) du joint d'étanchéité et
**en ce que** la bague (8) de bord d'étanchéité est traversée par au moins une ouverture de délestage (16) qui est disposée entre le bord d'étanchéité (9) et la surface extérieure de la bague (8) de bord d'étanchéité et qui débouche dans la surface frontière (14).

2. Joint d'étanchéité primaire de tige ou de piston selon la revendication 1, **caractérisé en ce que** la section transversale de l'ouverture de délestage (16) est de préférence comprise entre 0,19 et 3,1 mm².

3. Joint d'étanchéité primaire de tige ou de piston selon les revendications 1 ou 2, **caractérisé en ce que** sur le côté du bord d'étanchéité (9) tourné vers l'espace (1) à fermer hermétiquement, la bague (8) de bord d'étanchéité présente un bourrelet de soutien périphérique (31) et **en ce que** l'espace (32) situé entre le bord d'étanchéité (9) et le bourrelet de soutien (31) est ventilé par au moins une rainure axiale (33) ménagée dans le bourrelet de soutien (31).

4. Joint d'étanchéité primaire de tige ou de piston selon l'une des revendications 1 à 3, **caractérisé en ce que** lors de sa fabrication, le diamètre nominal du bourrelet de soutien (31) correspond essentiellement à celui du bord d'étanchéité (9).

5. Joint d'étanchéité primaire de tige ou de piston selon l'une des revendications 1 à 4, **caractérisé en ce que** sur le côté non tourné vers l'espace (1) à fermer hermétiquement, la bague (8) de bord d'étanchéité chevauche par l'arrière la bague profilée (10) par une saillie (35).

6. Joint d'étanchéité primaire de tige ou de piston selon l'une des revendications 1 à 5, **caractérisé en ce que** la bague profilée (10) est soutenue par son bourrelet latéral (36) sur la surface latérale (37) de la rainure (4) tournée vers l'espace (1) à fermer hermétiquement.
